# EUROPEAN PATENT APPLICATION

(11) **EP 4 163 251 A1**
(43) Date of publication of application: **12.04.2023**
(21) Application number: 21201820.4
(22) Date of filing: 11.10.2021
(51) Int. Cl.: C01B 3/36, F23D 14/24, F23Q 3/00

(54) **REACTOR FOR PARTIAL OXIDATION OF HYDROCARBONS**

(71) Applicant: CASALE SA, 6900 Lugano (CH)
(72) Inventor: ZANICHELLI, Luca, 20126 Milano (IT); COLMEGNA, Giacomo, 6900 Massagno (CH)
(74) Representative: M. Zardi & Co S.A.

(57) **Abstract**

Reactor (1) for partial oxidation of a fuel (2) with an oxidant (3) to a synthesis gas (4) comprising CO and H2, the reactor (1) includes: a vessel (5) enclosing a reaction chamber (6) for the partial oxidation of said fuel (2) in the presence of said oxidant (3); a burner (7) arranged to feed said fuel (2) and said oxidant (3) to said reaction chamber (6); said burner (7) comprises: a first passage (9) for said oxidant (3) and a second passage (2) for said fuel (2), said first (9) and said second passage (11) are coaxially arranged one around the other; an ignition mean (13) and a flame detection sensor (14), wherein said ignition mean (13) and said flame detection sensor (14) are movable within the burner between a start-up position (30) proximal to the reaction chamber (6) and a second retracted position (31) distanced from said reaction chamber (6).

## Description

### Field of application

The invention is in the field of syngas production. The invention particularly pertains to a reactor for the partial oxidation of hydrocarbons and to a method to operate said reactor during start-up and during syngas generation.

### Prior art

The term syngas or synthesis gas is used to describe a gas mixture containing H2 and CO, together with minor amounts of CO2 and hydrocarbons i.e. CH₄.

The syngas production capacity has always been increasing and it is still rising due to its broad utilization in the chemical industry e.g. for the synthesis of ammonia, urea, methanol and its derivatives.

Several technologies are commercially available for the synthesis of syngas, including Steam Reforming SR for producing a H2 rich syngas from catalytic reactions, Partial Oxidation POx for producing a rich CO syngas from non-catalytic reactions and Autothermal Reforming ATR that combines catalytic steam and CO2 reforming reactions.

POx is a not catalytical technology that can be employed to partially combust hydrocarbons in the presence of oxygen to generate syngas at high temperatures, e.g. between 1100 °C and 1400 °C.

Partial oxidation is typically carried out in a reactor that includes a refractory lined pressure vessel and a process burner. The refractory lined pressure vessel delimits a reaction chamber wherein the partial oxidation reactions take place whilst the process burner is configured for injecting the reagents including a fuel and an oxidant into said chamber that operates at high temperature and at high pressure.

The process burners are also designed and optimized to supply the reagents to the reaction chamber as separate streams to promote the formation of a diffusion flame when the reagents enter into contact.

Start-up operations of the POx reactors are rare however, when they occur, fuel must be introduced into the reaction chamber and combusted with an oxidant either air, oxygen or enriched air in a lean flame to bring the operating temperature of the refractory lined vessel above the self-ignition temperature of the reagents. Once this pre heat temperature has been reached the reagents for the partial oxidation operation can be conveyed into the reaction chamber where they will self-ignite to initiate the generation of syngas.

Typically, a flame poor in fuel and rich in oxidant (lean flame) is established during start-up to pre-heat the refractory lined vessel above the self-ignition temperature of the reagents. During this phase, the flame's temperature must be very carefully increased overtime to avoid excessive thermal stresses on the refractory lining.

Unfortunately, conventional process burners are not adequate to establish a lean flame inside the reaction chamber and they are not suitable to accurately control the flame's temperature during start-up consequently, a dedicated burner must be provided.

A dedicated start-up burner can be a standalone piece that physically replaces the process burner during the start-up phase or alternatively, it can be arranged inside the process burner and subsequentially removed or retracted after the preheating stage has been completed.

A start-up burner should also comprise ignition means to provide the ignition of the reagents when the temperature of the refractory lined pressure vessels is below the self-ignition temperature of the reagents. A burner comprising an igniter burner to be used during a start-up phase is known for example from EP 2 085 696 A1.

A typical start-up sequence of a POx reactor includes the steps of providing a dedicated start-up burner inside the reaction chamber of a POx reactor, supplying air and a hydrocarbon via said start-up burner to the reaction chamber to generate a lean flame, progressively increasing the thermal power to heat up the refractory lining up to ca. 1100°C - 1400°C, removing or retracting the dedicated start-up burner from the reaction chamber when the above-mentioned temperature is reached and replacing (if needed) the dedicated start-up burner with a process burner and finally feeding reagents to said burner to generate a diffusion flame for the syngas production.

From the above-mentioned description, it's clear that the start-up phase of POx reactor is not a trivial operation as it involves the introduction and, at a later stage, the removal of the start-up burner and in some cases the substitution of the process burner with the start-up burner and vice versa. In addition, the start-up burner is undoubtedly a costly apparatus.

Therefore, in light of the consideration stated above it is highly desirable to provide an improved partial oxidation reactor with a burner that can be advantageously used both during start-up and during syngas generation. Preferably, the improved reactor should be easy to operate.

### Summary of the invention

The invention aims to overcome the above drawbacks of the prior art concerning the complexity of the operations required to start-up a POx reactor.

Accordingly, one aspect of the present invention is a reactor for the partial oxidation of hydrocarbons to syngas according to claim 1.

The reactor includes a vessel enclosing a reaction chamber for the partial oxidation of a fuel in the presence of an oxidant and a burner arranged to feed said fuel and said oxidant to said reaction chamber. The burner comprises a first passage for said oxidant and a second passage for said fuel, said first and said second passage are coaxially arranged one around the other.

The burner further comprises an ignition mean and a flame detection sensor. Said ignition mean and said flame detection sensor are movable within the burner between a start-up position proximal to the reaction chamber and a second retracted position distanced from said reaction chamber.

A further aspect of the present invention is a method to operate the above-mentioned reactor according to claim 10.

The method comprises the steps of regulating the flow rate of oxidant and fuel that are fed to the reaction chamber during start-up and during syngas generation via the burner assembly so to stabilize a lean flame during startup and a diffusion flame during the production of syngas.

Advantageously, the partial oxidation reactor of the present invention is more economical to be manufactured than the conventional POx burner because it does not require the provision of a dedicated burner during start-up. Indeed, the reactor of the present invention is provided with a burner assembly that can operate with a variable flow rate of reagents injected and that is suitable to stabilize the flame inside the reaction chamber both during start-up and during syngas generation.

Additionally, the method of the present invention allows to simplify and speed up the POx start-up procedure making the cumbersome operations associated with the switching between a dedicated burner to a process burner unnecessary.

### Detailed description of the invention

Particularly advantageously, the reactor can be operated with the same burner both during start-up and during syngas generation. Preferably, during start-up the temperature of the refractory lined vessel is progressively increased, at atmospheric pressure, to reach an operating temperature wherein the feeds for the production of syngas will be ignited by the hot refractory lining upon their mixing after entering the reactor.

According to an interesting application of the present invention, the reactor is supplied with a fuel comprising a light hydrocarbon e.g. natural gas or methane and with an oxidant comprising oxygen, oxygen-enriched air or air.

Preferably during start-up, the reactor is supplied with air or oxygen-enriched air whilst during syngas generation the reactor is supplied with pure oxygen, air or oxygen-enriched air to establish a lean flame during start up and a rich diffusion flame during the production of syngas.

Preferably, the reagents are provided to the reaction chamber via two separated conduits namely a first conduit and a second conduit. Preferably, the oxidant is fed to the reaction chamber via said first conduit that delimits on its interior said first passage whilst the fuel is fed to the reaction chamber via said second conduit that encloses said second passage. The first conduit and the second conduit are arranged coaxially between each other and they delimit a second passage between them.

Preferably, the burner is located above the reaction chamber in a central position of the reactor vessel. The first and the second conduit can assume different forms and shapes but according to an interesting application said first conduit and said second conduit are circular and said passage between them is consequently annular.

The reactor of the invention is further provided with a central conduit that encloses a flame detection sensor and an ignition mean. Preferably the flame detection sensor is a UV sensor or a thermocouple whilst the ignition mean is preferably a spark-based ignition system either high energy or low energy. The flame detection sensor is provided with a sensing portion to detect if the flame has been ignited inside the reaction chamber.

On the contrary, the ignition mean is provided with an ignitor tip that can reach a suitable position within the combustion chamber to be able to ignite the lean flame during start-up.

According to a particularly interesting application of the invention, the ignition mean and the flame detection sensor are movable along a longitudinal axis of said central conduit and they can reach at least the above-mentioned start-up position and retracted position.

The start-up position corresponds to a location along the axis of the central conduit wherein the tip of the ignition mean enters into the reaction chamber and is therefore exposed to the operating conditions e.g. temperature and pressure of the reaction chamber. When said ignitor is located in said start-up position, it can generate a spark to ignite the gas mixture in the reaction chamber.

On the contrary, when the ignition means and the flame detection sensor are located in said retracted position, the sensing portion of the flame detection sensor and the ignition means are shielded from the high temperature of the flame to protect them from the thermal and mechanical stresses caused by the high-temperature of the reaction chamber.

The applicant has found that commercially available UV flame detection sensors can correctly detect if the flame has been ignited also when said sensors are located in said retracted position.

Preferably, after the flame has been ignited said ignitor and said flame detection sensor are moved to a backwards position either automatically or manually with the aid of an operator and they are maintained in said retracted position during the production of syngas.

According to an alternative embodiment, the ignitor and the flame detection are removed from the burner at the end of the start-up phase.

According to an alternative embodiment of the present invention, the central conduit is not enclosed inside the burner but is mounted externally in the reactor vessel via a specific hole created in the latter and provided with a flange.

Preferably, the first and the second conduit communicate with the reaction chamber of the reactor by means of dedicated nozzles. The nozzles can be configured to direct and to expand the oxidant and the fuel flowing across said first conduit and said second conduit into said reaction chamber.

During the start-up phase and through the production of syngas, the burner is exposed to the high-temperature environment of the reaction chamber therefore, the burner may be integrated with a cooling mean arranged to convey a cooling medium, preferably water, towards and away from the nozzles. Preferably, the cooling mean comprises a plurality of conduits arranged to carry the cooling medium.

The reactor may further include a swirling device arranged inside the first conduit and configured to give a swirling motion to the oxidant conveyed to the reaction chamber. The swirling device can be used to enhance the mixing between the fuel and the oxidant and it may also promote a backflow recirculation of the oxidant inside the reaction chamber.

Preferably, during syngas generation, the operating pressure of the reactor is comprised between 10 to 120 barg, more preferably between 20 to 100 bars, whilst the synthesis temperature is preferably comprised between 1000 °C and 1500 °C or more preferably 1100 to 1400 °C. Due to the high operating temperature of the reactor, the vessel is preferably made with refractory materials.

The present invention also provides a method to operate a reactor for partial oxidation of fuel during start-up and syngas generation. The method comprises a series of steps or operations set to progressively increment the operating temperature of the reactor up to synthesis conditions and afterwards to generate syngas without requiring the replacement of the start-up burner with a process burner.

In more detail, the method of the invention comprises the steps of:
a) adjusting the position of said ignition mean and said flame detection sensor within the burner to reach said start-up position;
b) supplying an oxidant via said first passage to said reaction chamber and feeding a fuel via said second passage so to establish a reactive gas lean flame;
c) igniting said reactive gas mixture of step b) by means of said ignition mean to establish a lean flame in said reaction chamber;
d) verifying if the flame of step c) has been ignited by means of said flame detection sensor and, if so, retracting said ignition mean and said flame detection sensor to said retracted position;
e) adjusting the flow rate of said oxidant and of said fuel delivered to the reaction chambers so to progressively increase the thermal power of said flame until reaction chamber has reached a target temperature suitable for the production of synthesis gas.

Once the target temperature required for the production of syngas has been reached, the method further comprise the steps of:
f) interrupting the supply of said oxidant and said fuel to the reaction chamber so to extinguish said lean flame;
g) optionally removing the ignition mean and the flame detection sensor from the reactor and if required flushing said first and said second conduit with an inertization medium;
h) in sequence feeding a fuel via said second passage to said reaction chamber and then delivering an oxidant via said first passage to said reaction chamber so to establish a rich diffusion flame inside the reaction chamber;
i) finally withdrawing synthesis gas from the reactor.

Preferably, step e) of the method of the present invention is carried out with a suitable temperature ramp so that excessive thermal stresses on the refractory lined pressure vessel are prevented.

Preferably, the first and the second passage are enclosed respectively in a first and in a second conduit and according to a particularly preferred embodiment, the second conduit is arranged outside and is coaxial to the first conduit.

The composition of the oxidant injected in the reaction chamber can be different during start-up and during syngas generation. Preferably, during start-up the oxidant of point b) comprises air or oxygen-enriched air whilst during the syngas generation, the oxidant of point h) can also comprise pure oxygen. Advantageously, a lean flame can be established during start-up whilst a rich flame can be established during the production of syngas.

Following an interesting embodiment, step a) of the invention is carried out by moving said ignition mean and said flame detection sensor along a longitudinal axis of a central conduit.

The central conduit is preferably arranged inside said first conduit so to be an integral part of the burner thus facilitating its introduction and removal in and from the reaction vessel.

According to the invention the oxidant of step b) and the oxidant of step h) are fed to the reaction chamber via said first passage and the fuel of step b) and h) are fed via said second passage. No backflow and no cross-contamination between fuel and oxidant inside the conduits is achieved when switching from start-up to syngas generation.

The reactor of the present invention can be part of an ammonia or a methanol plant, in which case downstream of POx reactor a suitable heat exchanger, e.g. a waste heat boiler, can be provided to recover heat from the synthesis gas leaving the reactor. Additionally, the reagents fed to the POx reactor may be preheated by means of suitable pre-heaters before being conveyed to the POx reactor.

### Description of the figures

Fig. 1 is a schematic representation of a reactor for partial oxidation of hydrocarbons according to the invention.
Fig. 2 is a cross sectional view of a burner assembly according to a preferred embodiment of the invention.
Fig. 3 is a cross sectional view of a burner assembly according to another embodiment of the invention.
Fig. 4 is an exploded view of the burner assembly of Fig. 3.

### Detailed description of the preferred embodiments

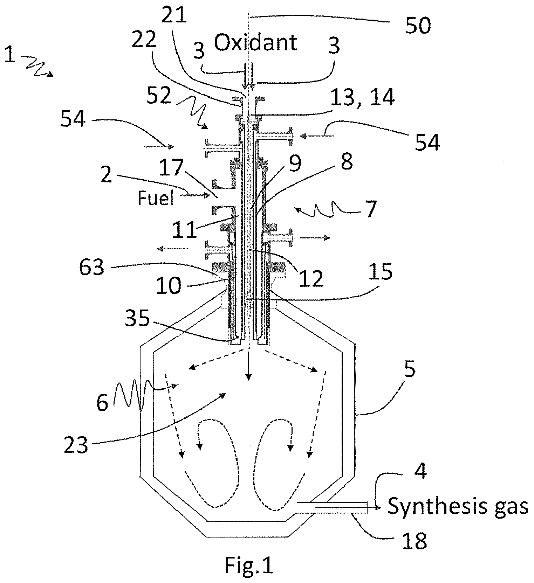

Fig.1 shows a reactor 1 for the partial oxidation comprising a refractory lined pressure vessel 5 and a burner 7.

The refractory lined pressure vessel 5 encloses a reaction chamber 6 wherein the partial oxidation reactions take places, the reaction chamber 6 is in fluid communication with the burner 7 and with an opening 18 for the discharge of the synthesis gas 4 generated in the reaction chamber 6.

The burner 7 is arranged in a central position of the reactor 7 and is sealed to the refractory lined pressure vessel 5 by means of a flange 63. The burner 7 includes a first opening 21 for the injection of an oxidant 3 and a second opening 17 located on a lateral position of the burner and arranged for injecting a fuel 2.

The burner 7 further comprises a first conduit 8 which delimits on its interior a first passage 9 and a second conduit 10 arranged outside and coaxial to said first conduit 8.

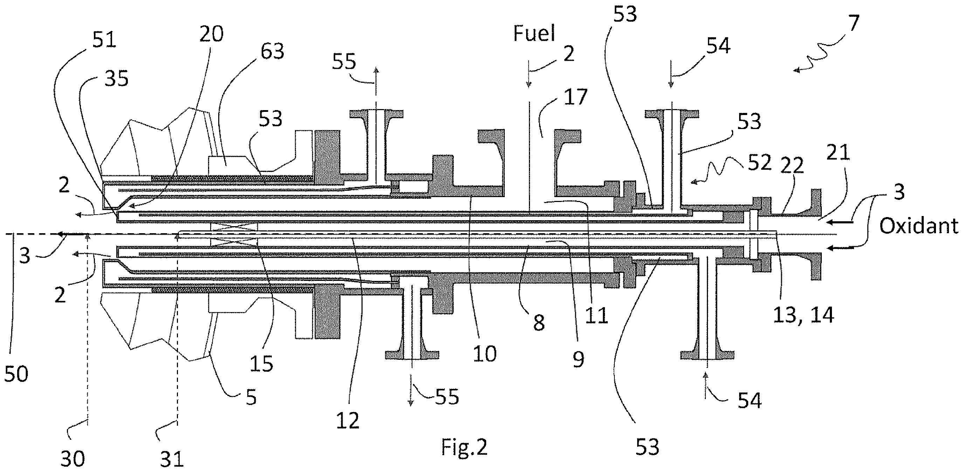

The first conduit 8 and the second conduit 10 define a second passage 11 between them, said second passage 11 is in communication with the reaction chamber 6 via the aperture 20 (Fig. 2).

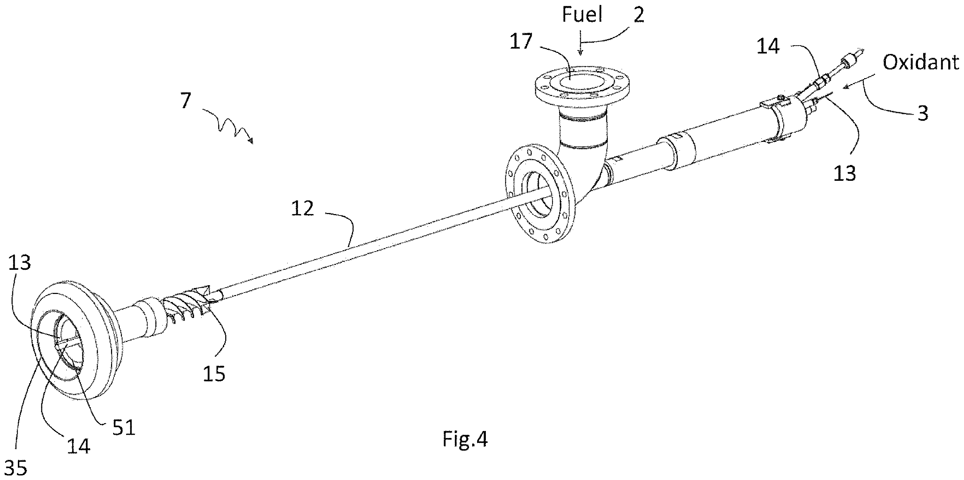

The first 8 and the second conduit 10 terminate respectively with a first 51 and a second nozzle 35 which face the reaction chamber 6 (Fig. 4). In addition, the first conduit 8 encloses a swirling device 15 arranged in proximity of said nozzle 51.

The burner assembly 7 comprises as well a central conduit 12 arranged inside the first conduit 8 and coaxial therewith. The central conduit 12 encloses an ignition mean 13 and a flame detection sensor 14 which are arranged along a longitudinal axis 50 of the burner assembly 7.

Note that the ignition mean 13 and the flame detection sensor 14 are enclosed inside the conduit 12 therefore in figure 1 it is not possible to differentiate them from the conduit itself 12.

The ignition mean 13 and the flame detection sensor 14 are movable along said axis 50 between a startup position 30 and a retracted position 31 indicated in Fig.2.

The reactor is also provided with a cooling mean 52, the latter comprises a series of conduits 53 configured to carry a cooling medium 54. The cooling medium is configured to remove heat from the assembly and especially from nozzles 35 and 51 that are directly exposed to the high temperature of the reaction flame.

The reactor 1 is supplied with an oxidant 3 and a fuel 2, the oxidant 3 is provided to the first conduit 8 via the opening 21 provided on a flange 22 of the burner 7. The oxidant runs through the first conduit 8 and after passing through the swirling device 15 is discharged into the reaction chamber 6.

On the contrary, the fuel 2 is first fed to the second conduit 10 via the opening 17, and after running through said conduit, it passed through the aperture 20 (Fig. 2) adjacent to the second nozzle 35 to be discharged inside the reaction chamber 6 in the direction of the refractory lined vessel 5.

Upon cold start-up, a reactive gas mixture generated by mixing of said fuel 2 and said oxidant 3 inside the reaction chamber is ignited by the ignition mean 13 for this purpose the ignition mean is located in the start-up position 30 (Fig. 2).

The ignition of the gas mixture creates a flame in a zone 23 of the reaction chamber 6 in proximity of the nozzle 35. A lean flame is generated during start-up whilst a rich flame is established during the generation of syngas, the composition of the flame is regulated by adjusting the flow rate of fuel and oxidant provided to the reaction chamber 6.

Fig. 2 is cross sectional view of a burner of the invention according to a preferred embodiment of the invention.

In figure it can be noted that the burner 7 comprises a cooling mean 52 provided with a plurality of conduits 53 arranged to convey a cooling medium 54, towards and away from the nozzles 35, 51. In more detail, the water 54 is supplied to said conduits via opening 60 and is discharged out of the burner 7 as a hot water stream 55 from opening 61.

The central conduit 12 that encloses the ignition mean 13 and the flame detection sensor 14 lies on the longitudinal axis 50. As above mentioned, the ignition mean 13 and the flame detection sensor 14 are movable along said axis at least between a start-up position and a retracted position. Said start-up position and said retracted position are respectively indicated on the axis 50 by arrows 30 and 31.

The location of the start-up position can be selected by the skilled person during the design stage of the burner assembly taking into account the ignition conditions. On the contrary, the retracted position is located in proximity to the swirling device.

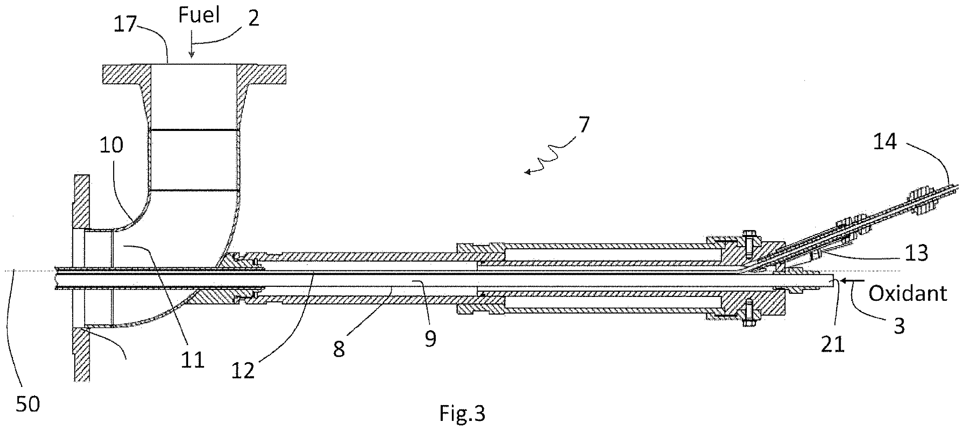

Fig. 3 shows an alternative embodiment of the invention wherein the ignition mean 13 and the flame detection sensor 14 are arranged on a central conduit 12 that is not enclosed in the first conduit but is adjacent to the latter.

Fig. 4 is an exploded view of the burner assembly of Fig. 3 wherein, for simplicity, the first conduit and the second conduit are not represented. On the contrary, figure 4 illustrates the above-mentioned first 51 and second nozzle 35. Said nozzles 51 and 35 are configured to direct and expand the oxidant and the fuel inside the reaction chamber 6.

## Claims

1. Reactor (1) for partial oxidation of a fuel (2) with an oxidant (3) to a synthesis gas (4) comprising CO and H2, the reactor (1) includes:
a vessel (5) enclosing a reaction chamber (6) for the partial oxidation of said fuel (2) in the presence of said oxidant (3);
a burner (7) arranged to feed said fuel (2) and said oxidant (3) to said reaction chamber (6);
said burner (7) comprises:
a first passage (9) for said oxidant (3) and a second passage (11) for said fuel (2), said first (9) and said second passage (11) are coaxially arranged one around the other;
an ignition mean (13) and a flame detection sensor (14), wherein said ignition mean (13) and said flame detection sensor (14) are movable within the burner between a start-up position (30) proximal to the reaction chamber (6) and a retracted position (31) distanced from said reaction chamber (6).

2. Reactor according to claim 1, further comprising a first conduit (8) which delimits on its interior said first passage (9), a second conduit (10) arranged outside and coaxial to said first conduit (8) wherein said first conduit (8) and said second conduit (10) delimit said second passage (11) between them.

3. Reactor according to claim 2, further comprising a central conduit (12) arranged inside said first conduit (8), said central conduit (12) encloses said ignition mean (13) and said flame detection sensor (14).

4. Reactor according to claim 3, wherein said ignition mean (13) and said flame detection sensor (14) are movable along a longitudinal axis (50) of said central conduit (12) between said start-up position (30) and said retracted position (31).

5. Reactor (1) according to any previous claims, wherein said first conduit (8) and said second conduit communicates with the reaction chamber (6) by means of nozzles (35, 51), said nozzles (35, 51) are configured to direct and to expand said oxidant (3) and said fuel (2) into said reaction chamber (6).

6. Reactor according to any previous claims, wherein the burner (7) further comprises a cooling mean (52), wherein said cooling mean (52) comprising a plurality of conduits (53) arranged to convey a cooling medium (54), preferably water, towards and away from the nozzles (35, 51).

7. Reactor (1) according to any previous claims, wherein the reactor (1) includes a swirling device (15) arranged inside said first conduit (8) and configured to imprint a swirling motion to said oxidant (3) conveyed to the reaction chamber (6), more preferably configured to provide backflow circulation of oxidant in a region of the reaction chamber.

8. Reactor according to any previous claims, wherein said vessel (5) is a refractory lined pressure vessel and wherein said first conduit (8) and said second conduit (10) are circular and said second passage (11) is annular.

9. Reactor according to any previous claims, wherein the flame detection sensor (14) is a UV sensor or a thermocouple and the ignition mean is a spark generating device.

10. Method to operate a reactor for partial oxidation of a fuel (2) with an oxidant (3) to a synthesis gas (4) during start-up and during syngas generation, the reactor (1) includes:
a vessel (5) enclosing a reaction chamber (6) for the partial oxidation of said fuel (2) in the presence of said oxidant (3);
a burner (7) arranged to feed said fuel (2) and said oxidant (3) to said reaction chamber (6);
said burner (7) comprises:
a first passage (9) for said oxidant (3) and a second passage (11) for said fuel (2), said first (9) and said second passages (11) being coaxially arranged one around the other;
an ignition mean (13) and a flame detection sensor (14), wherein said ignition mean (13) and said flame detection sensor (14) are movable within the burner between a start-up position (30) proximal to the reaction chamber (6) and a retracted position (31) distanced from said reaction chamber (6);
the method comprises the steps of:
a) adjusting the position of said ignition mean (13) and said flame detection sensor (14) within the burner (7) to reach said start-up position (31);
b) supplying an oxidant (3) via said first passage (9) to said reaction chamber (6) and feeding a fuel (2) via said second passage (2) so to establish a reactive gas mixture;
c) igniting said reactive gas mixture of step b) by means of said ignition mean (13) to establish a lean flame in said reaction chamber (6);
d) verifying if the flame of step c) has been ignited by means of said flame detection sensor (14) and, if so, retracting said ignition mean (13) and said flame detection sensor (14) to said retracted position (31);
e) adjusting the flow rate of said oxidant (3) and of said fuel (2) delivered to the reaction chamber (6) so to progressively increase the thermal power of said flame until said reaction chamber (6) has reached a target temperature suitable for the generation of synthesis gas (4).

11. Method according to claim 10, further comprising the steps of:
f) interrupting the supply of said oxidant (3) and said fuel (2) to the reaction chamber (6) so to extinguish said lean flame;
g) optionally removing said ignition mean and said flame detection sensor from the reactor and if required flushing said first and said second conduit with an inertization medium;
h) in sequence, feeding a fuel via said second passage (11) to said reaction chamber (6) and then delivering an oxidant via said first passage (9) to said reaction chamber (6) so to establish a rich diffusion flame inside the reaction chamber (6);
i) withdrawing synthesis gas (4) from the reactor (1).

12. Method according to claim 10 or 11, wherein said oxidant (3) of point b) comprises air or an oxygen-enriched air and said oxidant of point h) comprises pure oxygen.

13. Method according to any of claims 10 to 12, wherein: said first passage (9) is enclosed in a first conduit and said second passage is enclosed in a second conduit, said second conduit (10) is arranged outside and is coaxial to said first conduit (8).

14. Method according to any of claims 10 to 13, wherein step a) is carried out by moving said ignition mean (13) and said flame detection sensor (14) along a longitudinal axis (50) of a central conduit (12), wherein said central conduit is arranged inside said first conduit.

15. Method according to any of claims 10 to 14, wherein said oxidant of steps b) and h) are supplied to the reaction chamber (6) with a swirling motion, preferably arranged to provide backflow circulation of oxidant in a region of the reaction chamber (6).

16. Method according to any of claims 10 to 15, wherein said target temperature of step e) is comprised between 1100 °C and 1400 °C.
